# EUROPEAN PATENT APPLICATION

(11) **EP 1 452 958 A2**
(43) Date of publication of application: **01.09.2004**
(21) Application number: 03022640.1
(22) Date of filing: 06.10.2003
(51) Int. Cl.: G06F 3/14

(54) **On-screen display unit**

(30) Priority: 25.02.2003 JP 2003047779
(71) Applicant: Renesas Technology Corp., Tokyo 100-6334 (JP); Renesas LSI Design Corporation, Itami-shi, Hyogo 664-0851 (JP)
(72) Inventor: Matsumoto, Seiji, Itami-shi Hyogo 664-0851 (JP)
(74) Representative: Winter, Brandl, Fürniss, Hübner, Röss, Kaiser, Polte Partnerschaft

(57) **Abstract**

An on-screen display unit includes OSD RAMs (1a and 1b) each for storing data on one of OSD blocks to be subjected to OSD (on-screen display); a memory bus (11) for transferring data to be stored to the OSD RAMs (1a and 1b) from a CPU (4); and an OSD local bus (12) for transferring the data stored in the OSD RAMs (1a and 1b) to make the OSD. The OSD RAMs (1a and 1b) are supplied with the data to be stored through the control of switches (2a and 2b) alternately, and transfer the stored data to the OSD local bus 12 alternately. The on-screen display unit can cope with a high frequency OSD clock signal, and carry out the OSD normally.

## Description

### BACKGROUND OF THE INVENTION

### Field of the Invention

The present invention relates to an on-screen display (OSD) unit for displaying various patterns such as characters, numerals and symbols on a screen.

### Description of Related Art

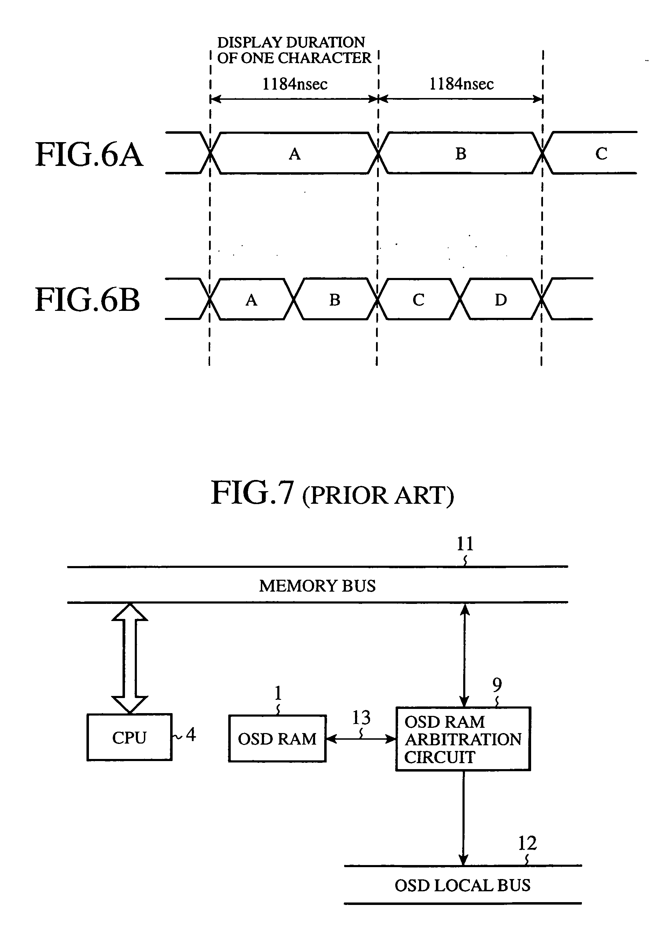

Fig. 7 is a block diagram showing an ordinary configuration of a conventional on-screen display unit. The on-screen display unit includes an OSD (on-screen display) RAM 1, a CPU 4, an OSD RAM arbitration circuit 9, a memory bus 11, an OSD local bus 12 and an OSD RAM bus 13. To display patterns such as characters, numerals and symbols on a screen, the CPU 4 stores data on attribute codes such as character codes and color codes in the OSD RAM 1 in advance. Thus, the patterns are displayed on a screen in accordance with the data.

The on-screen display unit uses an OSD clock signal fed from the outside as the operation clock signal, so that individual blocks operate in synchronism with the OSD clock signal. Likewise, the OSD RAM 1 operates in synchronism with the OSD clock signal, and transfers character codes to a character ROM (not shown) and attribute codes to an output circuit (not shown) via the OSD local bus 12.

The memory bus 11, a path for accessing the OSD RAM 1, is used as a path for writing the character codes and attribute codes. The CPU 4 writes the character codes and attribute codes in the OSD RAM 1 via the memory bus 11 in accordance with a basic operation clock signal. The basic operation clock signal of the CPU 4 usually differs from the OSD clock signal in operation frequency as described in Relevant Reference 1, for example.

Generally, the basic operation clock signal operates asynchronously to the display clock signal. Thus, as for the OSD RAM 1, there are two different access schemes, that is, memory bus access, and OSD local bus access. If the OSD RAM 1 consists of a dual-port RAM, the access based on the two different access timings offers no problem. However, since a dual-port RAM has a circuit size larger than a single-port RAM, it is not used normally. Thus, the OSD RAM 1 is provided with the OSD RAM arbitration circuit 9 for arbitrating between the two different access timings.

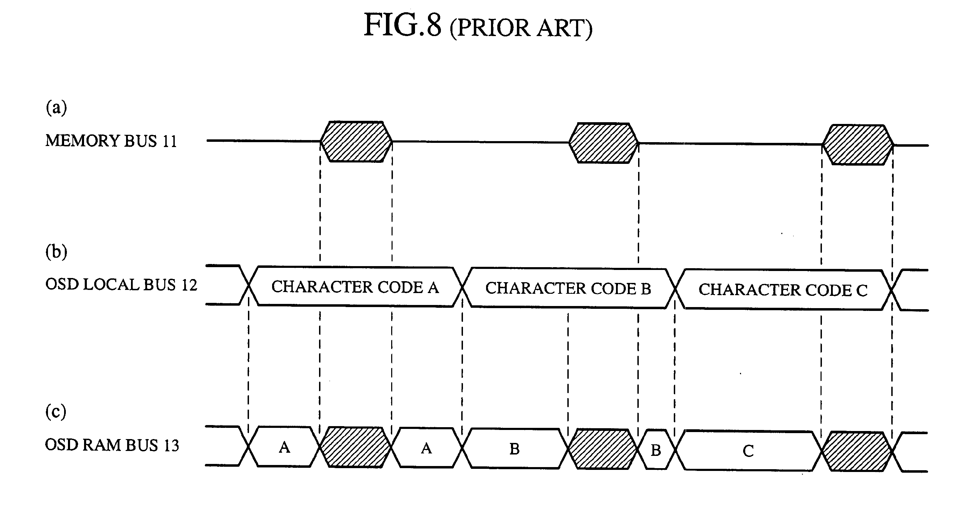

Fig. 8 is a timing chart illustrating data timing on the buses: Fig. 8 (a) illustrates the data timing on the memory bus 11; Fig. 8(b) illustrates the data timing on the OSD local bus 12; and Fig. 8(c) illustrates the data timing on the OSD RAM bus 13.

During OSD processing, the OSD RAM arbitration circuit 9 transfers data from the OSD RAM 1 to the OSD local bus 12 via the OSD RAM bus 13 in synchronism with the OSD clock signal as illustrated in Fig. 8 (b) . If the CPU 4 makes access to the OSD RAM 1 as illustrated in Fig. 8(a) in this case, the OSD RAM arbitration circuit 9 gives priority to the access from the memory bus 11 so that the data from the memory bus 11 is placed on the OSD RAM bus 13 as illustrated in Fig. 8(c). After completing the access from the CPU 4, the OSD RAM arbitration circuit 9 allows the OSD processing to gain access to the OSD RAM bus 13, again, thereby continuing the OSD processing.

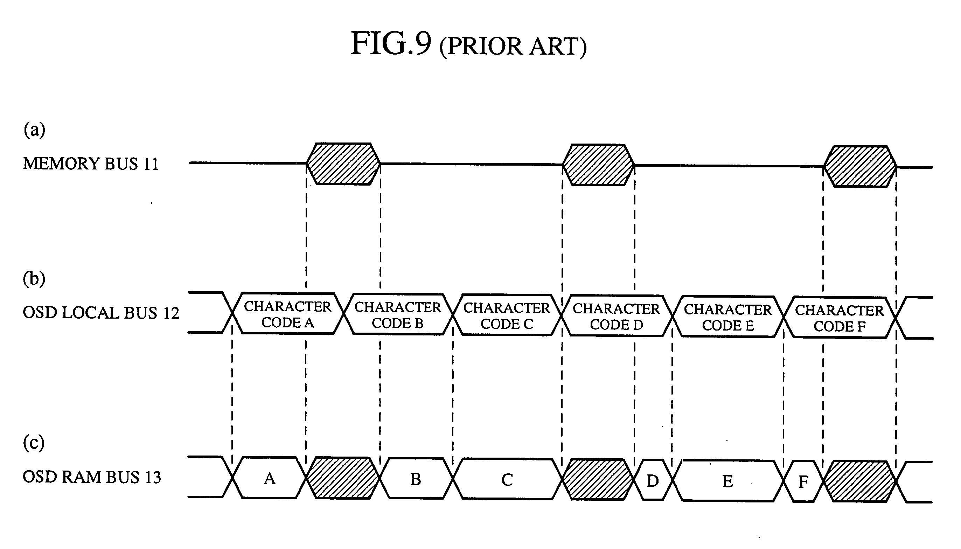

To support a high performance TV by improving the OSD function, such as increasing the number of characters in one scanning interval or the horizontal scanning frequency, a demand for a higher rate OSD clock signal is growing. Fig. 9 is a timing chart illustrating the data timing on the buses when the operation frequency higher than that of the OSD clock signal of Fig. 8 is used. In this case, the length of the data of character codes D and F on the OSD RAM bus 13 is reduced as illustrated in Fig. 9 (c). This will reduces the transfer margin to the next-stage OSD ROM (not shown) or output circuit (not shown). Furthermore, an increasing operation frequency of the OSD clock signal can result in data missing.

Relevant Reference 1: Japanese patent publication No. 2715179 (see, the "operation" section of the specification, at the right column on page 2)

With the foregoing configuration, the conventional on-screen display unit has a problem of missing data to be placed on the OSD local bus 12 when the OSD clock signal increases its operation frequency, thereby hindering normal OSD.

### SUMMARY OF THE INVENTION

The present invention is implemented to solve the foregoing problem. It is therefore an object of the present invention to provide an on-screen display unit capable of carrying out the OSD normally without using a dual-port OSD RAM, even if the operation frequency of the OSD clock signal is increased.

According to a first aspect of the present invention, there is provided an on-screen display unit comprising: a CPU for generating data to be subjected to OSD (on-screen display); first and second OSD RAMs each for storing the data to be subjected to OSD in one of OSD blocks; a memory bus for transferring the data to be stored in the first and second OSD RAMs in synchronization with an operation clock signal of the CPU; an OSD local bus for transferring the data stored in the first and second OSD RAMs to be used for the OSD in synchronization with an OSD clock signal; a register to which the CPU sets a switching bit; a switch for connecting the first OSDRAM to the memory bus and the second OSDRAM to the OSD local bus in response to the setting of the switching bit; and OSD control circuit for generating an interrupt signal to the CPU at an end of OSD of the data stored in the second OSDRAM, wherein the CPU, receiving the interrupt signal, sets the switching bit of the register such that the switch connects the second OSDRAM to the memory bus and the first OSDRAM to the OSD local bus, and supplies the memory bus with subsequent data.

According to a second aspect of the present invention, there is provided an on-screen display unit including: an OSD (on-screen display) RAM for storing data to be subjected to OSD; a memory bus for transferring data to be stored in the OSD RAM; a buffer for storing data read from the OSD RAM; an OSD local bus for transferring data in the buffer to be subjected to the OSD; and a buffer transfer control circuit for reading data necessary for the OSD on a horizontal scanning line from among the data stored in the OSD RAM and storing the data to the buffer, and for writing data from the memory bus to the OSD RAM during transfer of the data stored in the buffer to the OSD local bus.

The on-screen display unit according to the present invention offers an advantage of being able to carry out the OSD normally even if the operation frequency of the OSD clock signal is increased.

### BRIEF DESCRIPTION OF THE DRAWINGS

Fig. 1 is a block diagram showing a configuration of an embodiment 1 of the on-screen display unit in accordance with the present invention;
Fig. 2 is a block diagram showing a configuration of an embodiment 2 of the on-screen display unit in accordance with the present invention;
Fig. 3 is a diagram illustrating an OSD area on the screen of the embodiment 2;
Fig. 4 is a block diagram showing a configuration of an embodiment 4 of the on-screen display unit in accordance with the present invention;
Fig. 5 is a block diagram showing a configuration of an embodiment 5 of the on-screen display unit in accordance with the present invention;
Fig. 6 is a timing chart illustrating data timing on the buffer input bus of an embodiment 6 of the on-screen display unit in accordance with the present invention;
Fig. 7 is a block diagram showing a configuration of a conventional on-screen display unit;
Fig. 8 is a timing chart illustrating data timing on buses of the conventional on-screen display unit; and
Fig. 9 is another timing chart illustrating data timing on the buses of the conventional on-screen display unit.

### DETAILED DESCRIPTION OF THE PREFERRED EMBODIMENTS

The invention will now be described with reference to the accompanying drawings.

### EMBODIMENT 1

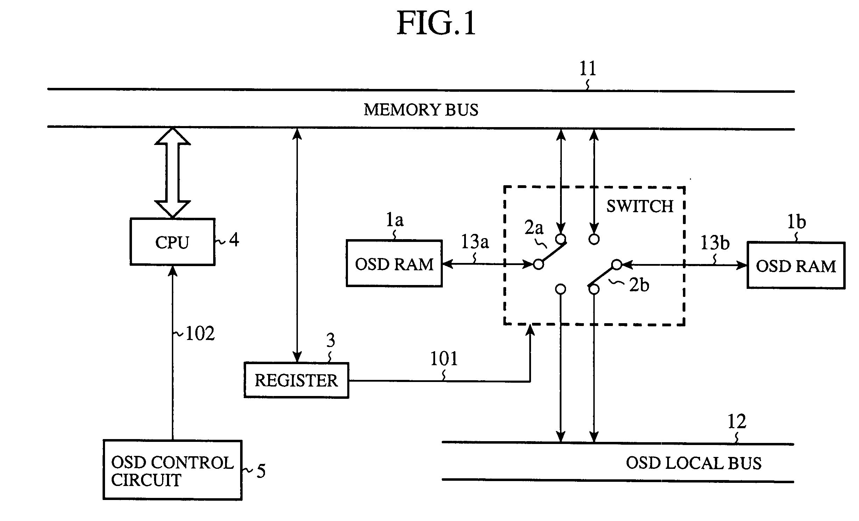

Fig. 1 is a block diagram showing a configuration of an embodiment 1 of the on-screen display unit in accordance with the present invention. As shown in Fig. 1, the on-screen display unit includes an OSD (on-screen display) RAM 1a (first OSD RAM) , an OSD RAM 1b (second OSD RAM), switches 2a and 2b, a register 3, a CPU 4, an OSD control circuit 5, a memory bus 11, an OSD local bus 12 and OSD RAM buses 13a and 13b.

Next, the operation of the present embodiment 1 will be described.

The OSD RAMs 1a and 1b, modules that are physically independent of each other, are each connected to the memory bus 11 or OSD local bus 12 via the switches 2a and 2b. The switches 2a and 2b are controlled by the value of a switch selection bit 101 set in the register 3. The switches 2a and 2b connect the OSD RAMs 1a and 1b to one and the other of the memory bus 11 and OSD local bus 12 in response to the value of the switch selection bit 101 fed from the register 3.

Assume that when the value of the switch selection bit 101 is "0", the switch 2a connects the OSD RAM 1a to the memory bus 11, and the switch 2b connects the OSD RAM 1b to the OSD local bus 12. In contrast, when the value of the switch selection bit 101 is "1", the switch 2a connects the OSD RAM 1a to the OSD local bus 12 and the switch 2b connects the OSD RAM 1b to the memory bus 11.

The OSD RAMs 1a and 1b store the data of individual OSD blocks for OSD on the screen. The CPU 4 controls which one of the OSD blocks is to be subjected to the OSD on the screen. More specifically, it sets the value of the switch selection bit 101 in the register 3. In response to the value, one of the switches 2a and 2b connects the OSD RAM 1a or OSD RAM 1b which includes the data for making the OSD of the specified OSD block, to the OSD local bus 12.

For example, when the value of the switch selection bit 101 in the register 3 is "0", the switch 2b connects the OSD RAM 1b to the OSD local bus 12 so that the data set in the OSD RAM 1b is transferred to the OSD local bus 12 via the OSD RAM bus 13b and switch 2b in synchronism with the OSD clock signal. In this case, the OSD RAM 1a is connected to the memory bus 11. Thus, the CPU 4 sets the data, which is to be displayed in the next OSD block, in the OSD RAM 1a via the memory bus 11, switch 2a and OSD RAM bus 13a in synchronism with the basic operation clock signal of the CPU 4.

The OSD control circuit 5 selects the OSD block corresponding to the OSD RAM 1a or the OSD block corresponding to the OSD RAM 1b with reference to the vertical synchronizing signal and horizontal synchronizing signal. Then, when the OSD of each of the OSD blocks has been completed, the OSD control circuit 5 sends an interrupt signal 102 to the CPU 4.

When the OSD has been completed of the OSD block corresponding to the data stored in the OSD RAM 1b, the CPU 4 receives the interrupt signal 102 from the OSD control circuit 5, and sets the value of the switch selection bit 101 of the register 3 at "1". In response to it, the switch 2a connects the OSD RAM 1a to the OSD local bus 12 so that the data stored in the OSD RAM 1a is transferred to the OSD local bus 12 via the OSD RAM bus 13a and switch 2a in synchronism with the OSD clock signal. On the other hand, the switch 2b connects the OSD RAM 1b to the memory bus 11 so that the CPU 4 stores the data, which is to be displayed in the next OSD block, in the OSD RAM 1b via the memory bus 11, switch 2b and OSD RAM bus 13b in synchronism with the basic operation clock signal of the CPU 4.

When the OSD has been completed of the OSD block corresponding to the data stored in the OSD RAM 1a, the CPU 4 receives the interrupt signal 102 from the OSD control circuit 5, and sets the value of the switch selection bit 101 of the register 3 at "0".

In this way, the data to be displayed in each OSD block on the screen is stored in the OSD RAM 1a or OSD RAM 1b alternately, and transferred from the OSD RAM 1a or OSD RAM 1b to the OSD local bus 12 alternately. Accordingly, regardless of the timing the CPU 4 stores the display data in the OSD RAM 1a or OSD RAM 1b in synchronism with the basic operation clock signal, the data stored in the OSD RAM 1a or OSD RAM 1b can be transferred to the OSD local bus 12 without missing in synchronism with the OSD clock signal.

Thus, the present embodiment 1 can gain access to the two OSD RAMs 1a and 1b regardless of the asynchronous operation between the basic operation clock signal and OSD clock signal, because it can operate the two OSD RAMs 1a and 1b independently.

As described above, the present embodiment 1 is configured such that it includes the two OSD RAMs 1a and 1b each for storing data on one of the OSD blocks to be displayed, stores the display data into the OSD RAM 1a or 1b alternately, and transfers the data from the OSD RAM 1b or 1a to the OSD local bus 12 alternately. Accordingly, no collision between the data written from the memory bus 11 to the OSD RAM 1a or 1b and the data output from the OSD RAM 1b or 1a to the OSD local bus 12 takes place on the OSD RAM buses 13a and 13b. As a result, the present embodiment 1 offers an advantage of being able to carry out the OSD normally even if the operation frequency of the OSD clock signal is increased.

### EMBODIMENT 2

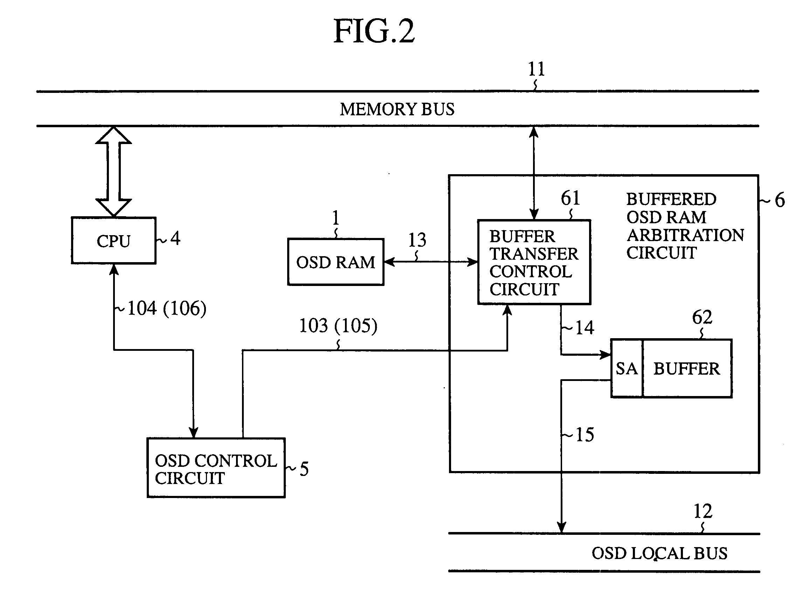

Fig. 2 is a block diagram showing a configuration of an embodiment 2 of the on-screen display unit in accordance with the present invention. As shown in Fig. 2, the on-screen display unit includes an OSD RAM 1, a CPU 4, an OSD control circuit 5, a buffered OSD RAM arbitration circuit 6 having a buffer transfer control circuit 61 and a buffer 62, a memory bus 11, an OSD local bus 12, an OSD RAM bus 13, a buffer input bus 14 and a buffer output bus 15. The "SA" in the buffer 62 refers to a "sense amplifier" in the buffer 62.

Next, the operation of the present embodiment 2 will be described.

When reading data out of the OSD RAM 1, the OSD RAM arbitration circuit 9 of the conventional circuit as shown in Fig. 7 does not transfers the read data to any buffer, but to the OSD local bus 12 directly. In contrast, the buffered OSD RAM arbitration circuit 6 of the present embodiment 2 includes the buffer 62 so that the read data is once transferred to the buffer 62 to be temporarily stored, and then to the OSD local bus 12.

The buffered OSD RAM arbitration circuit 6 is asserted by a buffer transfer control enabling signal 103 output from the OSD control circuit 5. The buffer transfer control enabling signal 103 is enabled in a period in which the OSD is not carried out on the screen.

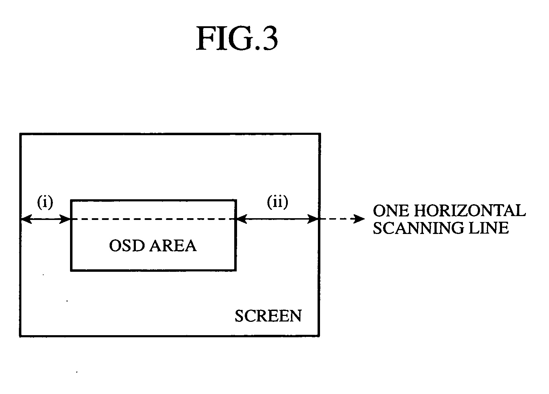

Fig. 3 is a diagram illustrating an OSD area on the screen. The OSD area usually consists of a plurality of OSD blocks. Here, a case will be described in which the buffer transfer control enabling signal 103 is enabled in the section (i) beginning from the start of the horizontal scanning by the horizontal synchronizing signal and ending at the start of the OSD on a horizontal scanning line.

When the buffer transfer control enabling signal 103 is enabled in the section (i) of the horizontal scanning line, the buffer transfer control circuit 61 transfers the data corresponding to the number of characters to be displayed on the horizontal scanning line from the OSD RAM 1 to the buffer 62 via the OSD RAM bus 13 and buffer input bus 14, thereby storing the data in the buffer 62. To display part of the individual characters of 32 characters on the horizontal scanning line, the data to be transferred becomes 2 × 32 = 64 bytes when the data for each character consists of two bytes.

To carry out the OSD after completing the section (i) of the horizontal scanning line, the buffer 62 sequentially transfers its data to the OSD local bus 12 via the buffer output bus 15. In the course of this, the CPU 4 reads a flag bit 104 indicating that the present scanning position is outside the section (i) from the OSD control circuit 5. Then, the CPU 4 transfers the data corresponding to the number of characters to be displayed on the next horizontal scanning line, to the buffer transfer control circuit 61 via the memory bus 11, and the buffer transfer control circuit 61 writes the data into the OSD RAM 1 via the OSD RAM bus 13.

In this way, outside the section (i) of the horizontal scanning line, the present embodiment 2 can gain access to the OSD RAM 1 to store the data for the OSD independently of the OSD speed. The data transfer from the OSD RAM 1 to the buffer 62, and the data transfer from the buffer 62 to the OSD local bus 12 are carried out in the same manner on the next horizontal scanning line.

As described above, the present embodiment 2 is configured such that in the section (i) extending from the start of the horizontal scanning by the horizontal synchronizing signal to the start of the OSD on the horizontal scanning line, the buffer transfer control circuit 61 temporarily stores into the buffer 62 part of the OSD data in the OSD RAM 1, which is to be subjected to the OSD on the horizontal scanning line, and that while the data stored in the buffer 62 is transferred to the OSD local bus 12 for the OSD, the CPU 4 stores the subsequent OSD data in the OSD RAM 1. Accordingly, no collision between the data written from the memory bus 11 to the OSD RAM 1 and the data output from the OSD RAM 1 to the OSD local bus 12 takes place on the OSD RAM bus 13. As a result, the present embodiment 2 offers an advantage of being able to carry out the OSD normally even if the operation frequency of the OSD clock signal is increased.

### EMBODIMENT 3

A block diagram showing a configuration of an embodiment 3 of the on-screen display unit in accordance with the present invention is a diagram in which the buffer transfer control enabling signal 103 and flag bit 104 in the foregoing embodiment 2 of Fig. 2 are replaced by a buffer transfer control enabling signal 105 and a flag bit 106, respectively. The foregoing embodiment 2 carries out the buffer transfer in the section (i) before the OSD on the horizontal scanning line on the screen as shown in Fig. 3. However, the length of the section (i) before the OSD can be reduced depending on the position of the OSD on the screen. In such a case, it is likely better to carry out the buffer transfer of the data, which is to be subjected to the OSD on the next horizontal scanning line, in a section (ii) extending from the end of the OSD to the input of the horizontal synchronizing signal for the next horizontal scanning line.

In this case, assume that the OSD control circuit 5 of Fig. 2 outputs the buffer transfer control enabling signal 105 enabled in the section (ii) on the screen of Fig. 3, and that the CPU 4 reads the flag bit 106 set in the OSD control circuit 5, which indicates that the present time is outside the section (ii). When the buffer transfer control enabling signal 105 is enabled in the section (ii) on the horizontal scanning line, the buffer transfer control circuit 61 transfers the 64 byte data for displaying 32 characters on the horizontal scanning line from the OSD RAM 1 to the buffer 62 via the OSD RAM bus 13 and buffer input bus 14, and stores the data in the buffer 62.

To carry out the OSD on the next horizontal scanning line after the completion of the section (ii), the buffer 62 sequentially transfers its data to the OSD local bus 12 via the buffer output bus 15. In the course of this, the CPU 4 reads the flag bit 106 indicating that the current position is outside the section (ii) set in the OSD control circuit 5, and transfers the data corresponding to the number of characters to be displayed on the next horizontal scanning line, to the buffer transfer control circuit 61 via the memory bus 11. Thus, the buffer transfer control circuit 61 stores the data to the OSD RAM 1 via the OSD RAM bus 13.

As described above, the present embodiment 3 is configured such that in the section (ii) extending from the end of the OSD to the input of the horizontal synchronizing signal for the next horizontal scanning line, the buffer transfer control circuit 61 transfers the data, which is to be subjected to the OSD on the next horizontal scanning line among the OSD data stored in the OSD RAM 1, to the buffer 62 to be temporarily stored in the buffer 62, and that while the data stored in the buffer 62 is output to the OSD local bus 12 for the OSD, the CPU 4 stores the subsequent OSD data in the OSD RAM 1. Accordingly, no collision between the data written from the memory bus 11 to the OSD RAM 1 and the data output from the OSD RAM 1 to the OSD local bus 12 takes place on the OSD RAM bus 13. As a result, the present embodiment 3 offers an advantage of being able to carry out the OSD normally even if the operation frequency of the OSD clock signal is increased.

### EMBODIMENT 4

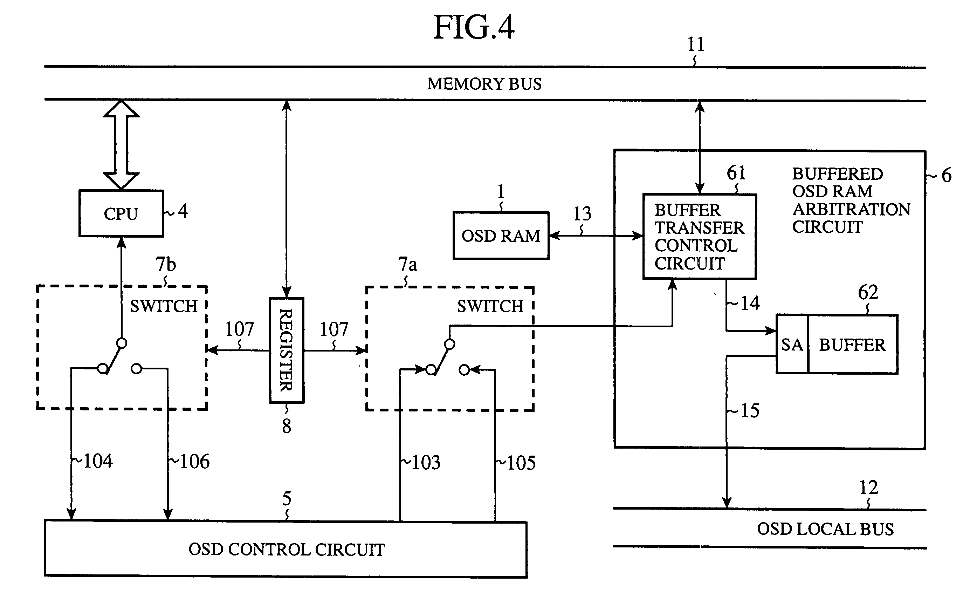

Fig. 4 is a block diagram showing a configuration of an embodiment 4 of the on-screen display unit in accordance with the present invention. As shown in Fig. 4, the on-screen display unit includes an OSD RAM 1, a CPU 4, an OSD control circuit 5, a buffered OSD RAM arbitration circuit 6 having a buffer transfer control circuit 61 and a buffer 62, switches 7a and 7b, a register 8, a memory bus 11, an OSD local bus 12, an OSD RAM bus 13, a buffer input bus 14 and a buffer output bus 15.

Next, the operation of the present embodiment 4 will be described.

The foregoing embodiment 2 or 3 carries out the buffer transfer of the data from the OSD RAM 1 to the buffer 62 in the section (i) or section (ii) on the screen as illustrate in Fig. 3. The duration of the section (i) or section (ii) is decided depending on the position of the OSD on the screen. Here, the duration of the section (i) and section (ii) will be examined.

For example, assume the following factors in the NTSC system.
Color sub-carrier frequency fsc = 3.579545 MHz;
Horizontal frequency fh = fsc × 2/455 ≒ 15734.264 Hz; Horizontal scanning line 1H = 1/fh ≒ 63.6 µ sec; and
Operation frequency of OSD clock signal fosc = 27 MHz.
Then,
Display processing time of one character ≒ 1184 nsec (16 dots × 74 nsec);
TV display section of one display block = 1184 nsec × 34 characters = 40256 nsec ≒ 40.3 µ sec; and
OSD circuit operating time before displaying the left-most character concealed from TV screen = 1184 nsec × 2 characters = 2368 nsec ≒ 2.4 µ sec.

Accordingly, the OSD processing during one horizontal scanning line takes time of 40.3 µsec + 2.4 µsec. Consequently, the time period of the section (i) and section (ii) applicable for the buffer transfer
= 63.6 µsec - 40.3 µsec - 2.4 µsec ≒ 20.9 µsec.

Assume that the operation frequency of the OSD clock signal used for the buffer transfer is fosc, and that the transfer of one byte data to the OSD RAM 1 takes five cycles of the operation frequency fosc of the OSD clock signal. Then, the data transfer of the 32 characters takes the following time.
32 characters × 2 bytes/character × 5 cycle × 74 nsec = 4736 nsec ≒ 4.8 µ sec

Therefore the position of the OSD on the screen must be decided such that the buffer transfer time of 4.8 µ sec is secured in either the section (i) or section (ii).

To meet a variety of OSD, the present embodiment 4 enables the register 8 to select either the buffer transfer control enabling signal 103 asserted in the section (i) or the buffer transfer control enabling signal 105 asserted in the section (ii), thereby making it possible to select the timing for asserting the buffer transfer control circuit 61.

The CPU 4, which controls the position of the OSD blocks on the screen, sets the value of the switch selection bit 107 in the register 8. For example, when the value of the switch selection bit 107 is "0", the switch 7a supplies the buffer transfer control circuit 61 with the buffer transfer control enabling signal 103 asserted in the section (i), and the CPU 4 reads the flag bit 104 set in the OSD control circuit 5 to indicate that present position is outside'the section (i).

On the other hand, when the value of the switch selection bit 107 is "1", the switch 7a supplies the buffer transfer control circuit 61 with the buffer transfer control enabling signal 105 asserted in the section (ii), and the CPU 4 reads the flag bit 106 set in the OSD control circuit 5 to indicate that the present position is outside the section (ii). The remaining processing is the same as that of the foregoing embodiments 2 and 3.

In this way, it is enough for the present embodiment 4 to secure the buffer transfer time in either the section (i) or section (ii). To achieve this, the CPU 4 sets the value of the switch selection bit 107 in the register 8 in accordance with the position of the OSD block on the screen, thereby switching the operation timing of the buffer transfer control circuit 61.

As described above, the present embodiment 4 is configured such that the buffer transfer control circuit 61 stores the OSD data in the OSD RAM 1, and the CPU 4 switches the buffer transfer timing of the OSD data, which is output from the OSD RAM 1 to be subjected to the OSD on a horizontal scanning line, between the section (i) and section (ii) depending on the position of the OSD block on the screen, in which the section (i) begins at the start of the horizontal scanning by the horizontal synchronizing signal and ends at the start of the OSD, and the section (ii) begins at the end of the OSD and ends at the input of the horizontal synchronizing signal of the next horizontal scanning line. Accordingly, no collision between the data written from the memory bus 11 to the OSD RAM 1 and the data output from the OSD RAM 1 to the OSD local bus 12 takes place on the OSD RAM bus 13. As a result, the present embodiment 4 offers an advantage of being able to carry out the OSD normally even if the operation frequency of the OSD clock signal is increased.

### EMBODIMENT 5

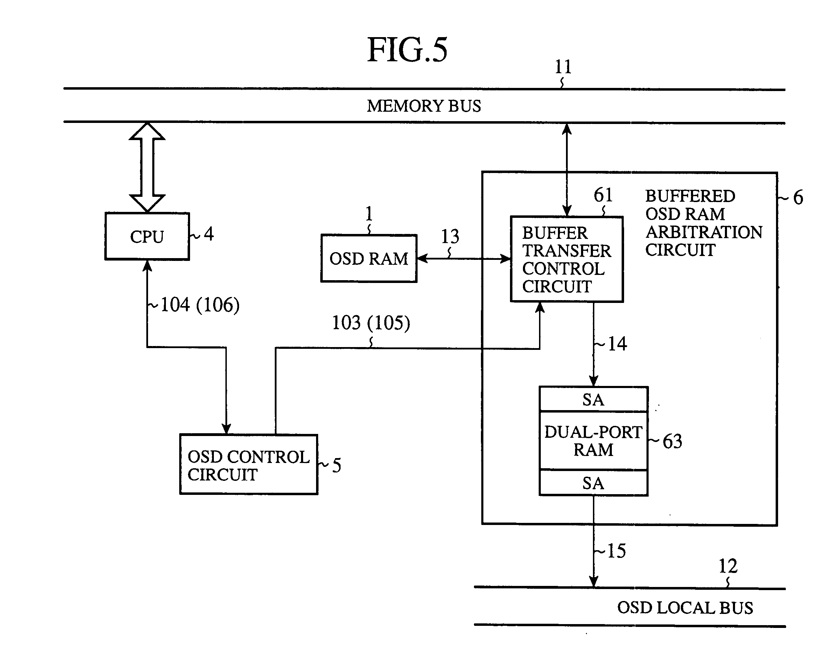

Fig. 5 is a block diagram showing a configuration of an embodiment 5 of the on-screen display unit in accordance with the present invention. As shown in Fig. 5, the on-screen display unit includes an OSD RAM 1, a CPU 4, an OSD control circuit 5, a buffered OSD RAM arbitration circuit 6 having a buffer transfer control circuit 61 and a dual-port RAM 63, a memory bus 11, an OSD local bus 12, an OSD RAM bus 13, a buffer input bus 14 and a buffer output bus 15.

The foregoing embodiment 2 uses a single-port buffer as the buffer 62. Accordingly, it must completely isolate the timing for the buffer transfer through the buffer input bus 14 from the timing for the data transfer to the OSD local bus 12 through the buffer output bus 15.

In contrast, the present embodiment 5 as shown in Fig. 5 replaces the buffer 62 by the dual-port RAM 63. Accordingly, the buffer transfer control circuit 61 can carry out the buffer transfer to the dual-port RAM 63 and the data transfer from the dual-port RAM 63 to the OSD local bus 12 simultaneously. The remaining processing is the same as that of the embodiment 2.

The present embodiment 5 has a disadvantage of increasing the circuit scale because it replaces the single-port buffer 62 by the dual-port buffer 63. However, it can increase the time assigned to the OSD RAM 1 for the buffer transfer to 20.9 µ sec or more.

As described above, in addition to the advantage of the embodiment 2, the present embodiment 5 offers an advantage of being able to secure longer time for the buffer transfer from the OSD RAM 1 by using the dual-port RAM 63 as the buffer, and hence be applicable to a high-definition image system that carries out high-speed scanning.

### EMBODIMENT 6

A block diagram showing a configuration of an embodiment 6 of the on-screen display unit in accordance with the present invention is the same as that of the foregoing embodiment 2 of Fig. 2.

Fig. 6 is a timing chart illustrating data timing on the buffer input bus 14. In the foregoing embodiment 2, the buffer transfer control circuit 61 operates as illustrated in Fig. 6 (a). It transfers two byte data for one character from the OSD RAM 1 to the buffer 62 via the buffer input bus 14 in the display duration of one character. In contrast, the buffer transfer control circuit 61 of the present embodiment 6 operates as illustrated in Fig. 6(b). It sequentially reads data for two characters in the display duration of one character in advance from the first to 32nd characters to be displayed on a horizontal scanning line, and stores the data in the buffer 62 via the buffer input bus 14.

Then, the present embodiment 6 conducts the OSD by sequentially supplying the OSD local bus 12 with the data on the first to 32nd characters stored in the buffer 62. If the CPU 4 makes an access to the OSD RAM 1 during the OSD processing, the buffer transfer control circuit 61 gives priority to the access by the CPU 4. However, since the buffer 62 stores the data that has been read in advance, the OSD can be continued by transferring data from the buffer 62. The remaining processing is the same as that of the foregoing embodiment 2.

In this way, the present embodiment 6 enables the CPU 4 to make an access to the OSD RAM 1 even during the section corresponding to the OSD area as illustrated in Fig. 3.

Although the present embodiment 6 handles the case that reads data corresponding to two characters in the display duration of one character, it is obvious that three or more characters can be read, offering a comparable advantage.

As described above, the present embodiment 6 is configured such that the buffer transfer control circuit 61 reads data corresponding to two or more characters in advance from the OSD RAM 1 in the display duration of one character sequentially from first to 32nd characters to be displayed on a horizontal scanning line, and stores the data to the buffer 62 via the buffer input bus 14, and that it places the data on the OSD local bus 2 from the first to 32nd characters sequentially to carry out the OSD. As a result, the present embodiment 6 offers an advantage of making it possible for the CPU 4 to make an access to the OSD RAM 1 even in the section of the OSD area, in addition to the advantage of the foregoing embodiment 2.

## Claims

1. An on-screen display unit comprising:
a CPU (4) for generating data to be subjected to OSD (on-screen display);
first and second OSD RAMs (la and 1b) each for storing the data to be subjected to OSD in one of OSD blocks;
a memory bus (11) for transferring the data to be stored in said first and second OSD RAMs in synchronization with an operation clock signal of said CPU;
an OSD local bus (12) for transferring the data stored in said first and second OSD RAMs to be used for the OSD in synchronization with an OSD clock signal;
a register (3) to which said CPU sets a switching bit;
a switch (2) for connecting said first OSDRAM to said memory bus and said second OSDRAM to said OSD local bus in response to the setting of the switching bit; and
OSD control circuit (5) for generating an interrupt signal to said CPU at an end of OSD of the data stored in said second OSDRAM, wherein
said CPU, receiving the interrupt signal, sets the switching bit of said register such that said switch connects said second OSDRAM to said memory bus and said first OSDRAM to said OSD local bus, and supplies said memory bus with subsequent data.

2. An on-screen display unit comprising:
an OSD (on-screen display) RAM (1) for storing data to be subjected to OSD;
a memory bus (11) for transferring data to be stored in said OSD RAM;
a buffer (62) for storing data read from said OSD RAM;
an OSD local bus (12) for transferring data in said buffer to be subjected to the OSD; and
a buffer transfer control circuit (61) for reading data necessary for the OSD on a horizontal scanning line from among the data stored in said OSD RAM and storing the data to said buffer, and for writing data from said memory bus to said OSD RAM during transfer of the data stored in said buffer to said OSD local bus.

3. The on-screen display unit according to claim 2, wherein said buffer transfer control circuit reads the data necessary for the OSD on a current horizontal scanning line and stores the data in said buf fer, during a section on the current horizontal scanning line before making the OSD on the current horizontal scanning line.

4. The on-screen display unit according to claim 2, wherein said buffer transfer control circuit reads the data necessary for the OSD on a next horizontal scanning line and stores the data in said buffer, during a section on the current horizontal scanning line after making the OSD on the current horizontal scanning line.

5. The on-screen display unit according to claim 2, wherein said buffer transfer control circuit selects one of a first operation mode and a second operation mode, wherein in the first operation mode said buffer transfer control circuit reads the data necessary for the OSD on a current horizontal scanning line and stores the data in said buffer during a section on the current horizontal scanning line before making the OSD on the current horizontal scanning line, and wherein in the second operation mode said buffer transfer control circuit reads the data necessary for the OSD on a next horizontal scanning line and stores the data in said buffer during a section on the current horizontal scanning line after making the OSD on the current horizontal scanning line.

6. The on-screen display unit according to claim 2, wherein said buffer comprises a dual-port RAM.

7. The on-screen display unit according to claim 2, wherein said buffer transfer control circuit reads in advance at least two characters in each display duration of one character from among the data stored in said OSD RAM in a sequence to be displayed on the horizontal scanning line.
